# EUROPÄISCHE PATENTSCHRIFT

(11) **EP 0 783 630 B1**
(45) Veröffentlichungstag und Bekanntmachung des Hinweises auf die Patenterteilung: **29.12.1999**
(21) Anmeldenummer: 95931076.4
(22) Anmeldetag: 26.09.1995
(51) Int. Cl.: F03D 11/00

(54) **LASTHEBEVORRICHTUNG AN EINER WINDKRAFTANLAGE**
LOAD-RAISING DEVICE ON A WIND POWER ARRANGEMENT
APPAREIL DE LEVAGE MONTE SUR UNE EOLIENNE

(30) Priorität: 26.09.1994 AT 183494
(43) Veröffentlichungstag der Anmeldung: 16.07.1997
(73) Patentinhaber: Hehenberger, Gerald, 9020 Klagenfurt (AT)
(72) Erfinder: Hehenberger, Gerald, 9020 Klagenfurt (AT)
(74) Vertreter: Hehenberger, Reinhard, Dipl.-Ing.
(86) Internationale Anmeldenummer: AT9500186
(87) Internationale Veröffentlichungsnummer: WO9610130

(56) Entgegenhaltungen:
- DE-A- 2 838 239
- DE-C- 736 454
- FR-A- 2 568 948
- US-A- 5 062 765
- PROCEEDINGS OF THE 24TH INTERSOCIETY ENERGY CONVERSION ENGINEERING CONFERENCE (IECEC), (ED. W.D. JACKSON & ASS.ED. D.A. HULL), Bd.4, 6 - 11 August 1989, WASHINGTON, D.C. Seiten 2015 - 2019, XP000132182 J.A.C. KENTFIELD 'A space-frame-tower concept for small, self-erecting, wind turbines'

## Beschreibung

Die Erfindung betrifft eine Windkraftanlage mit einem Mast, mit einem an der Spitze des Mastes drehbar gelagerten Rahmen, und mit einer Winde mit einem schwenkbaren Gestänge, an dem eine Umlenkrolle gelagert ist, wobei das Gestänge in oder parallel zu einer Vertikalebene verschwenkbar ist, in der die Drehachse des Rotors liegt, und wobei am Mast ein Rotor, ein Getriebe und ein Generator gelagert sind.

Windkraftanlagen sind Anlagen, die für eine Lebensdauer der Hauptkomponenten von etwa 20 bis 30 Jahren ausgelegt werden. In diesem Zeitraum sind regelmäßig Wartungsarbeiten durchzuführen und in regelmäßigen Abständen Verschleißteile zu ersetzen. Im Laufe der Lebensdauer einer Windkraftanlage sind aufgrund der hohen dynamischen Betriebsbeanspruchung erfahrungsgemäß auch größere Komponenten wie z.B. Rotorblätter, Getriebe, Generatoren zu überholen bzw. zu reparieren. Solche Komponenten müssen zu diesem Zweck demontiert werden.

Auf manchen bekannten Windkraftanlagen sind Winden angeordnet, mit denen Teile geringeren Gewichtes, z.B. Werkzeuge und Ersatzteile, auf die Windkraftanlage gehoben werden können. Für schwerere Komponenten der Windkraftanlage und z.B. für das Montieren der Rotorblätter sind diese Winden jedoch nicht geeignet.

Um solche Komponenten an einer dem Stand der Technik entsprechenden Windkraftanlage montieren und demontieren zu können, ist der Einsatz eines Kranes notwendig. Unter den Randbedingungen, daß heutzutage die meistverkauften Windkraftanlagen mit ca. 40 m hohen Türmen und meist in abgelegenen Gegenden installiert werden, ist die Verfügbarkeit von zur Demontage geeigneten Kränen sehr begrenzt. Windparkbetreiber haben errechnet, daß der Einsatz eines Kranes Kosten in der Höhe von bis zu einem zweifachen Wartungs-Jahresbudget einer Windkraftanlage verursacht, und dies sogar in einer Gegend mit relativ guter Verfügbarkeit geeigneter Kräne. In dieser Rechnung ist der entgangene Gewinn durch Betriebsunterbrechung aufgrund der Wartezeit bis zum Eintreffen des Kranes noch nicht berücksichtigt. Ein weiterer Nachteil bei den Windkraftanlagen gemäß Stand der Technik ist, daß bei der Erstmontage einer Windkraftanlage das Maschinenhaus ohne Rotorblätter am Turm montiert wird. Die Rotorblätter werden anschließend einzeln mit dem Kran montiert, wobei die Montage der Rotorblätter ca. 50% der zur Gesamtmontage der Windkraftanlage benötigten Einsatzzeit des Kranes in Anspruch nimmt.

Eine gattungsgemäße Windkraftanlage ist aus der US-A-5 062 765 bekannt, wobei an der Spitze eines Mastes eine Plattform drehbar gelagert ist, auf der eine Winde mit einem schwenkbaren Gestänge mit einer Umlenkrolle angeordnet ist. Über die Höhe des Mastes regelmäßig verteilt sind an diesem übereinender liegende Rotoren mit Generatoren angeordnet. Da die Plattform drehbar an der Mastspitze gelagert ist, ist das Gestänge der Winde in oder parallel zu einer Vertikalebene verschwenkbar, in der die Drehachsen der Rotoren liegen. Da die Winde auf einer Plattform an der Turmspitze angeordnet ist, die Generatoren und Getriebe aber unterhalb der Plattform im Mast, ist die Montage und Demontage letzterer Anlageteile mit der Winde - wenn überhaupt - nur unter sehr erschwerten Bedingungen möglich. Außerdem ist durch den relativ großen vertikalen Abstand zwischen der Umlenkrolle der Winde und dem Rotor sowie dem Generator usw. ein exaktes Positionieren letztgenannter Anlageteile bei der Montage schwierig.

Die FR-A-2 568 948 zeigt ein Windkraftanlage mit einem Mast und einem darauf gelagerten Maschinenrahmen. Am Maschinenrahmen wiederum ist ein schwenkbares Gestänge gelagert, an dessen freiem Ende ein Rotor mit einem Generator gelagert ist. Am Mast ist bei der FR-A-2 568 948 eine Winde angeordnet und am Maschinenrahmen zwei Umlenkrollen. Durch Betätigen der Winde wird bei der FR-A-2 568 948 das Gestänge verschwenkt, wodurch gleichzeitig auch der am freien Ende angeordnete Rotor mitverschwenkt wird. Der Rotor kann daher zu Montagezwecken abgesenkt werden.

Die Aufgabe dieser Erfindung ist es, eine Windkraftanlage zur Verfügung zu stellen, bei der der Einsatz eines Kranes zu Montagezwecken soweit wie möglich vermieden werden kann.

Gelöst wird diese Aufgabe bei einer gattungsgemäßen Windkraftanlage dadurch, daß der Rahmen ein Maschinenrahmen ist, an dem der Rotor, das Getriebe und der Generator gelagert sind, daß die Umlenkrolle in den unmittelbaren Bereich über dem Rotor verschwenkbar ist, und daß das Gestänge im wesentlichen neben dem Rotor, dem Getriebe und dem Generator angeordnet ist.

Der Winde, die stark genug ist, um zur Montage oder Demontage aller Komponenten der Windkraftanlage zu dienen, ist ein Gestänge mit einer Umlenkrolle zugeordnet, das in bzw. parallel zu jener Ebene verschwenkbar ist, in der die Drehachse des Rotors liegt. Entlang dieser Achse sind üblicherweise alle wesentlichen Komponenten der Windkraftanlage, wie z.B. der Rotor, das Getriebe und der Generator angeordnet. Da das Gestänge in bzw. parallel zu jener Ebene verschwenkbar ist, in der diese Achse des Rotors liegt, können diese Komponenten auf besonders einfache und kostengünstige Weise montiert und demontiert werden. Insbesondere kann auch die Montage der Rotorblätter ohne einen sonst erforderlichen Kran durchgeführt werden.

Die sich bei beiden Ausführungsformen der Erfindung gegenüber dem Stand der Technik ergebenden Vorteile sind:
- abgesehen von der Erstmontage der Winde mit dem Gestänge ist die Montage und Demontage von Anlagenteilen ohne Einsatz eines Kranes möglich, wodurch eine wesentliche Kosteneinsparungen bzw. eine Verkürzung der Betriebsunterbrechung (in Folge des Wegfalles der Wartezeit bezüglich Verfügbarkeit und Antransport eines Kranes) möglich ist;
- eine wesentliche Reduktion der Kran-Einsatzdauer bei Erstmontage einer Windkraftanlage, da die Rotorblätter nicht unter Zuhilfenahme eines Kranes montiert werden müssen.

Weitere Merkmale und Vorteile der Erfindung ergeben sich aus den Unteransprüchen und der nachfolgenden Beschreibung von Ausführungsbeispielen der Erfindung unter Bezugnahme auf die Zeichnungen.

Es zeigt:
Fig. 1 eine Ausführungsform einer Windkraftanlage gemäß dem Stand der Technik,
Fig. 2 die Seitenansicht einer Ausführungsform einer Windkraftanlage gemäß vorliegender Erfindung, und
Fig. 3 den Grundriß einer Ausführungsform einer Windkraftanlage gemäß vorliegender Erfindung.

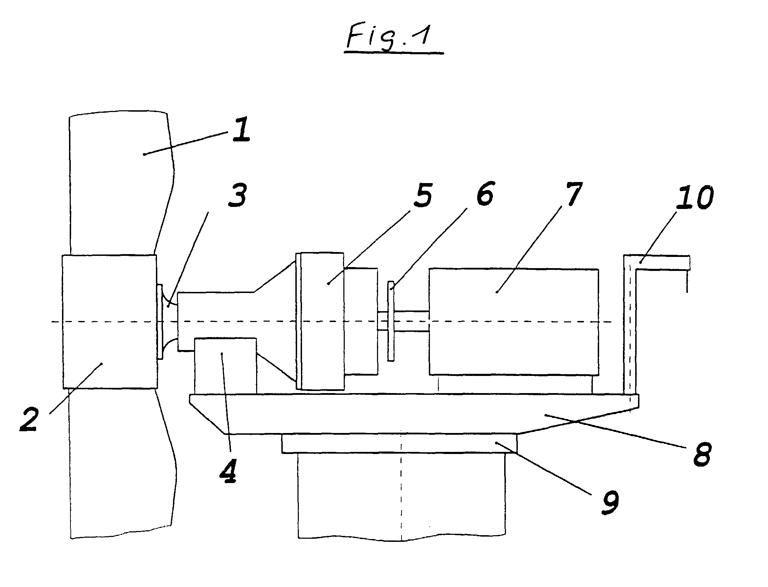

In Fig. 1 ist die bei Windkraftanlagen am häufigsten verwendete Ausführungsvariante dargestellt. Die Rotorblätter 1 werden an der Rotornabe 2 mit einer Schraubverbindung befestigt. Die Rotornabe 2 wird mit der Rotorwelle 3 verschraubt. Die Rotorwelle 3 dreht in einem Lagerbock 4. Ein Getriebe 5 mit angebauter Bremse 6 wird an die Rotorwelle 3 angebaut. Mittels Kupplung werden Getriebe 5 und Generator 7 miteinander verbunden. Der gesamte Triebstrang ist am Maschinenrahmen 8 befestigt. Ein sogenanntes Azimutlager inkl. Antrieb 9 dreht das gesamte Maschinenhaus in die aktuelle Windrichtung. Eine kleine Seilwinde 10 dient zum Aufziehen von Werkzeug, Schmiermittel, kleinen Ersatzteilen und dergleichen. Zur Demontage bzw. Montage von Teilen wie den Rotorblättern 1, dem Lagerstuhl 4, der Rotornabe 2, dem Getriebe 5, dem Generator 7 etc. Ist der Einsatz eines Kranes erforderlich.

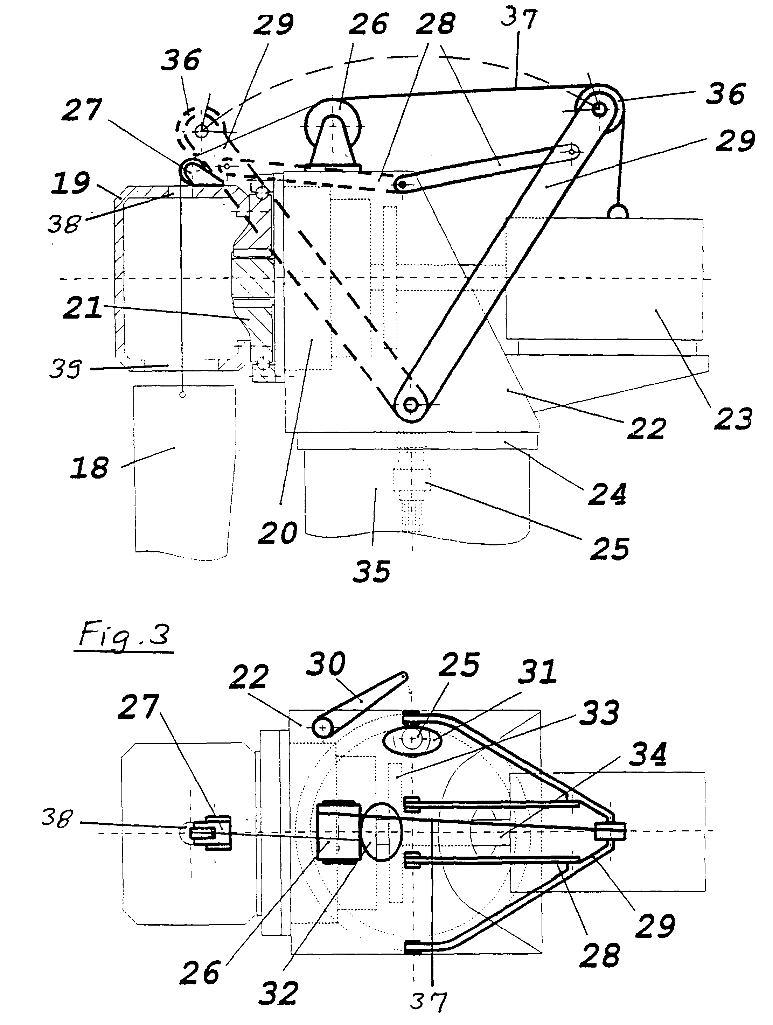

In den Fig. 2 und 3 ist eine Ausführungsform der Erfindung dargestellt. Die Rotorblätter 18 sind mittels einer in Fig. 2 nicht dargestellten Schraubverbindung mit einer Rotornabe 19 verbunden. Als Drehverbindung zwischen der Rotornabe 19 und einem Getriebe 20 dient ein Lager 21 mit einer Keilwellenverbindung zur Drehmomentübertragung zwischen der Rotornabe 19 und dem Getriebe 20. Das Getriebe 20 wird an einem Maschinenrahmen 22 angeschraubt. Dies gilt auch für einen Generator 23, der mittels einer Kupplung mit dem Getriebe 20 verbunden ist. Das Azimutlager 24 ist die Verbindung zwischen dem Maschinenrahmen 22 und einem Mast 35. Die Windrichtungsnachführung geschieht mittels zumindest einem Azimutantrieb 25.

Zur Montage bzw. Demontage von Rotornabe 19, Lager 21, Getriebe 22, Generator 23 und sämtlicher anderer Komponenten, die hier nicht im einzelnen angeführt werden, dient in Verbindung mit einer Winde 26 ein am Maschinenrahmen 22 schwenkbar befestigtes Gestänge, das bezüglich jener vertikalen Mittelebene, in der die Drehachse des Rotors liegt, symmetrisch angeordnet ist. Das Gestänge weist zwei Unterlenker 29, die mit einem Ende am Maschinenrahmen 22 gelagert sind, sowie zwei vorzugsweise längenveränderbare Oberlenker 28 auf, von denen ein Ende mit dem Maschinenrahmen 22 und das andere Ende mit dem Unterlenker 29 verbunden ist. Es kann natürlich auch nur ein einziger Unterlenker und/oder Oberlenker vorgesehen sein. An der Verbindung der beiden Unterlenker 29 ist eine Umlenkrolle 36 angeordnet, über die ein Seil 37 geführt ist, das auf die Winde 26 aufgespult werden kann. Mit Hilfe des Gestänges 28, 29 kann die Umlenkrolle 36 genau in der Vertikalebene bewegt werden, in der auch die Drehachse des Rotors 19 sowie der Hauptkomponenten der Windkraftanlage liegen.

Zur Rotorblattmontage kann das Gestänge 28, 29 am Maschinenrahmen 22 in den Bereich über dem Rotor 19 geschwenkt werden, wie in Fig. 2 durch die strichliert angedeutete Stellung des Gestänges 28, 29 gezeigt ist. Zum Aufziehen eines Rotorblattes 18 wird das Zugseil 37 durch Öffnungen 38, 39 in der Rotornabe 19 abgesenkt und das Rotorblatt nach dem Befestigen am Zugseil nach oben gezogen und an die Rotornabe 19 geschraubt.

Zusätzlich kann direkt an der Rotornabe 19 eine Umlenkrolle 27 befestigt sein, über die das Zugseil 37 zur Rotorblattmontage geführt werden kann. Dabei kann entweder eine einzige Umlenkrolle 27 für die Montage der einzelnen Rotorblätter 18 immer wieder umgesetzt werden oder es kann jedem Rotorblatt 18 bzw. jeder Öffnung 38 in der Nabe 19 eine eigene Umlenkrolle zugeordnet sein, wodurch die Montage der Rotorblätter 18 noch schneller durchgeführt werden kann.

Wenn der oder die Oberlenker 28 längenveränderlich ausgeführt sind, kann dies auf beliebige Weise erfolgen. Bevorzugt ist jedoch, wenn der oder die Oberlenker 28 über eine Gewindespindel oder über einen Seilzug längenveränderlich sind.

In Fig. 3 ist eine Ansicht auf die Windkraftanlage von Fig. 2 von oben gezeigt. Es ist dabei zusätzlich eine Hubeinrichtung 30, bestehend aus einem drehbaren Gestänge und einer kleinen Seilwinde, dargestellt, an der Werkzeuge, kleine Ersatzteile, die Winde 26, bzw. die Umlenkrolle 27 und das Gestänge 28, 29 aufgezogen werden können. Diese Hubeinrichtung 30 ist vorzugsweise am Maschinenrahmen 22 befestigt. Durch entsprechende Öffnungen 31, 32 im Maschinenrahmen 22 können mit der Hubeinrichtung 30 Komponenten wie Bremsanlage 33, Kupplung 34, Azimutantrieb 25 und diverse weitere Kleinteile demontiert bzw. montiert werden, wenngleich dies bei geeigneter Verschwenkbarkeit des Gestänges 28, 29 auch mit diesem durchgeführt werden kann.

## Patentansprüche

1. Windkraftanlage mit einem Mast (35), mit einem an der Spitze des Mastes (35) drehbar gelagerten Rahmen (22), und mit einer Winde (26) mit einem schwenkbaren Gestänge (28, 29), an dem eine Umlenkrolle (36) gelagert ist, wobei das Gestänge (28, 29) in oder parallel zu einer Vertikalebene verschwenkbar ist, in der die Drehachse des Rotors (19) liegt, und wobei am Mast (35) ein Rotor (19), ein Getriebe (20) und ein Generator (23) gelagert sind, dadurch gekennzeichnet, daß der Rahmen (22) ein Maschinenrahmen ist, an dem der Rotor (19), das Getriebe (20) und der Generator (23) gelagert sind, daß die Umlenkrolle (36) in den unmittelbaren Bereich über dem Rotor (19) verschwenkbar ist, und daß das Gestänge (28, 29) im wesentlichen neben dem Rotor (19), dem Getriebe (20) und dem Generator (23) angeordnet ist.

2. Windkraftanlage nach Anspruch 1, dadurch gekennzeichnet, daß das Gestänge einen Unterlenker (29), der mit einem Ende am Maschinenrahmen (22) gelagert ist, und einen längenveränderbaren Oberlenker (28) aufweist, dessen ein Ende mit dem Maschinenrahmen (22) und dessen anderes Ende mit dem Unterlenker (29) verbunden ist.

3. Windkraftanlage nach Anspruch 2, dadurch gekennzeichnet, daß die Umlenkrolle (36) am vom Maschinenrahmen (22) abgewandten Ende des Unterlenkers (29) vorgesehen ist.

4. Windkraftanlage nach Anspruch 2 oder 3, dadurch gekennzeichnet, daß das Gestänge (28, 29) zwei bezüglich jener Ebene, in der die Drehachse des Rotors (19) liegt, symmetrische, am Maschinenrahmen (22) gelagerte Unterlenker (29) aufweist.

5. Windkraftanlage nach Anspruch 2 oder 3, dadurch gekennzeichnet, daß die Umlenkrolle (36) an der Verbindung der beiden Unterlenker (29) angeordnet ist.

6. Windkraftanlage nach einem der Ansprüche 1 bis 5, dadurch gekennzeichnet, daß im Bereich der Rotornabe (19) wenigstens eine weitere Umlenkrolle (27) angeordnet ist.

7. Windkraftanlage nach Anspruch 6, dadurch gekennzeichnet, daß die wenigstens eine Umlenkrolle (27) an der Rotornabe (19) befestigbar ist.

8. Windkraftanlage nach einem der Ansprüche 1 bis 7, dadurch gekennzeichnet, daß in der Rotornabe (19) eine der Anzahl der Rotorblätter (18) entsprechende Anzahl von Öffnungen (38, 39) durch die Rotornabe (19) vorgesehen ist, und daß jede Öffnung (38, 39) mit der Achse eines Rotorblattes (18) fluchtet.

9. Windkraftanlage nach Anspruch 6 und 8, dadurch gekennzeichnet, daß die Umlenkrolle (27) im Bereich jeder Öffnung (38, 39) an der Rotornabe (19) befestigbar ist.

10. Windkraftanlage nach Anspruch 8 oder 9, dadurch gekennzeichnet, daß zur Montage eines Rotorblattes (18) ein von der Winde (26) angetriebenes Zugseil (37) über die Umlenkrolle (27, 36) am Gestänge (28, 29) und gegebenenfalls an der Rotornabe (19) und durch die entsprechende Öffnung (38, 39) in der Rotornabe (19) geführt ist.

11. Windkraftanlage nach einem der Ansprüche 2 bis 10, dadurch gekennzeichnet, daß der Oberlenker (28) über eine Gewindespindel verlängerbar ist.

12. Windkraftanlage nach einem der Ansprüche 2 bis 10, dadurch gekennzeichnet, daß der Oberlenker (28) einen Seilzug aufweist.

13. Windkraftanlage nach einem der Ansprüche 1 bis 12, dadurch gekennzeichnet, daß auf der Windkraftanlage, vorzugsweise am Maschinenrahmen (22), weiters eine Hubeinrichtung (30) mit einer geringeren Hubleistung als die der Winde (26) montierbar ist.

14. Windkraftanlage nach Anspruch 13, dadurch gekennzeichnet, daß die Hubeinrichtung (30) ein schwenkbares Hilfsgestänge und eine Hilfswinde aufweist.

## Claims

1. A wind power plant with a mast (35), a frame (22) rotatably mounted on the top of the mast (35), and a winch (26) with a pivoted linkage (28, 29) on which is mounted a deflection pulley (36), wherein the linkage (28, 29) can pivot in or parallel to a vertical plane in which lies the axis of rotation of the rotor (19) and wherein a rotor (19), a transmission (20) and a generator (23) are mounted on the mast (35), characterized in that the frame (22) is a machine frame on which the rotor (19), the transmission (20) and the generator (23) are mounted, in that the deflection pulley (36) can pivot in the region directly above the rotor (19) and in that the linkage (28, 29) is arranged essentially alongside the rotor (19), the transmission (20) and the generator (23).

2. A wind power plant according to claim 1, characterized in that the linkage comprises a lower link (29) which is mounted at one end on the machine frame (22) and a variable length upper link (28), whose one end is connected to the machine frame (22) and whose other end is connected to the lower link (29).

3. A wind power plant according to claim 2, characterized in that the deflection pulley (36) is provided on the end of the lower link (29) remote from the machine frame (22).

4. A wind power plant according to claim 2 or 3, characterized in that the linkage (28, 29) comprises two lower links (28) mounted on the machine frame (22) symmetrically relative to that plane in which the axis of rotation of the rotor (19) lies.

5. A wind power plant according to claim 2 or 3, characterized in that the deflection pulley (36) is arranged at the connection of the two lower links (29).

6. A wind power plant according to any of claims 1 to 5, characterized in that at least one further deflection pulley (27) is arranged in the region of the rotor hub (19).

7. A wind power plant according to claim 6, characterized in that the at least one deflection pulley (27) can be fixed on the rotor hub (19).

8. A wind power plant according to any of claims 1 to 7, characterized in that a number of openings (38, 39) through the rotor hub (19) corresponding to the number of rotor blades (18) are provided and in that each opening (38, 39) registers with the axis of a rotor blade (18).

9. A wind power plant according to claims 6 and 8, characterized in that the deflection pulley (27) can be fixed on the rotor hub (19) in the region of each opening (38, 39).

10. A wind power plant according to claim 8 or 9, characterized in that, in order to mount a rotor blade (18), a cable (37) driven by the winch (26) is passed over the deflection pulley (27, 36) on the linkage (28, 29) and optionally on the rotor hub (19) and through the corresponding opening (38, 39) in the rotor hub (19).

11. A wind power plant according to any of claims 2 to 10, characterized in that the upper link (28) can be extended via a threaded spindle.

12. A wind power plant according to any of claims 2 to 10, characterized in that the upper link (28) has a cable control.

13. A wind power plant according to any of claims 1 to 12, characterized in that a hoist (30) with a smaller lifting power than the winch (26) can be further mounted on the wind power plant, preferably on the machine frame (22).

14. A wind power plant according to claim 13, characterized in that the hoist (30) comprises a pivoted auxiliary linkage and an auxiliary winch.

## Revendications

1. Eolienne comprenant un mât (35), un châssis (22) monté tournant au sommet du mât (35) et un treuil (26) avec un système de bras (28, 29) pivotants portant une poulie de renvoi (36), le système de bras (28, 29) pouvant pivoter dans ou parallèlement à un plan vertical dans lequel est situé l'axe de rotation du rotor (19) et un rotor (19), un réducteur (20) et un générateur (23) étant montés sur le mât (35), caractérisé par le fait que le châssis (23) est un châssis de machine sur lequel le rotor (19), le réducteur (20) et le générateur (23) sont montés, par le fait que la poulie de renvoi (36) peut pivoter dans la zone située immédiatement au-dessus du rotor (19) et par le fait que le système de bras (28, 29) est disposé essentiellement à côté du rotor (19), du réducteur 20 et du générateur (23).

2. Eolienne selon la revendication 1, caractérisée par le fait que le système de bras comprend un bras inférieur (29) qui est monté par une extrémité sur le châssis de machine (22) et un bras supérieur (28) de longueur modifiable dont une extrémité est liée au châssis de machine (22) et l'autre extrémité au bras inférieur (29).

3. Eolienne selon la revendication 2, caractérisée par le fait que la poulie de renvoi (36) est prévue à l'extrémité du bras inférieur (29) éloignée du châssis (22).

4. Eolienne selon la revendication 2 ou 3, caractérisée par le fait que le système de bras (28, 29) comporte deux bras inférieurs (29) qui sont montés sur le châssis de machine (22), d'une manière symétrique par rapport au plan dans lequel est situé l'axe de rotation du rotor (19).

5. Eolienne selon la revendication 2 ou 3, caractérisée par le fait que la poulie de renvoi (36) est disposée au niveau de la réunion des deux bras inférieurs (29).

6. Eolienne selon une des revendications 1 à 5, caractérisée par le fait qu'au moins une poulie de renvoi (27) supplémentaire est disposée dans la région du moyeu de rotor (19).

7. Eolienne selon la revendication 6, caractérisée par le fait que la poulie de renvoi (27) au nombre d'au moins une peut être fixée au moyeu de rotor (19).

8. Eolienne selon une des revendications 1 à 7, caractérisée par le fait que des ouvertures (38, 39) sont prévues dans le moyeu de rotor (19) en un nombre égal au nombre de pales de rotor (18) et par le fait que chaque ouverture (38, 39) est alignée avec l'axe d'une pale de rotor (18).

9. Eolienne selon les revendications 6 et 8, caractérisée par le fait que la poulie de renvoi (27) peut être fixée au moyeu de rotor (19) dans la région de chacune des ouvertures (38, 39).

10. Eolienne selon les revendications 8 ou 9, caractérisée par le fait que, pour le montage d'une pale de rotor (18), un câble de traction (37) entraîné par le treuil (26) passe sur la poulie de renvoi (27, 36) sur le système de bras (28, 29) et le cas échéant le moyeu (19), puis à travers l'ouverture concernée (38, 39) dans le moyeu (19).

11. Eolienne selon une des revendications 2 à 10, caractérisée par le fait que le bras supérieur (28) peut être allongé à l'aide d'une tige filetée.

12. Eolienne selon une des revendications 2 à 10, caractérisée par le fait que le bras supérieur (28) comporte un moyen de traction à câble.

13. Eolienne selon une des revendications 1 à 12, caractérisée par le fait qu'un dispositif de levage (30) supplémentaire, avec une force de levage plus faible que celle du treuil (26) peut être monté sur l'éolienne, de préférence sur le châssis de machine (22).

14. Eolienne selon la revendication 13, caractérisée par le fait que le dispositif de levage (30) comporte un système de bras auxiliaires et un treuil auxiliaire.
